# EUROPÄISCHE PATENTSCHRIFT

(11) **EP 0 819 041 B1**
(45) Veröffentlichungstag und Bekanntmachung des Hinweises auf die Patenterteilung: **02.12.1998**
(21) Anmeldenummer: 96909172.7
(22) Anmeldetag: 04.04.1996
(51) Int. Cl.: B25J 9/04, B25J 19/00

(54) **INDUSTRIEROBOTER MIT MASSENAUSGLEICH**
INDUSTRIAL ROBOT WITH MASS BALANCE
ROBOT INDUSTRIEL AVEC EQUILIBRAGE DES MASSES

(30) Priorität: 07.04.1995 DE 29506008 U
(43) Veröffentlichungstag der Anmeldung: 21.01.1998
(73) Patentinhaber: KUKA Roboter GmbH, 86165 Augsburg (DE)
(72) Erfinder: ORTMEIER, Helmut, D-86316 Friedberg (DE); MARKERT, Joachim, D-86163 Augsburg (DE); ZIMMER, Ernst, D-86316 Friedberg (DE)
(74) Vertreter: Dipl.-Ing. Heiner Lichti Dipl.-Phys. Dr.rer.nat. Jost Lempert Dipl.-Ing. Hartmut Lasch
(86) Internationale Anmeldenummer: EP9601478
(87) Internationale Veröffentlichungsnummer: WO9631325

(56) Entgegenhaltungen:
- EP-A- 0 218 075
- DE-A- 3 310 107
- DE-A- 4 132 775
- FR-A- 2 436 656
- FR-A- 2 483 300
- US-A- 3 241 687

## Beschreibung

Die Erfindung betrifft einen mehrachsigen Industrieroboter, der zumindest ein Gestell, eine Schwinge, einen Ausleger und eine Roboterhand aufweist, die gelenkig aneinander gelagert und angetrieben sind.

Ein solcher Roboter ist in Form eines Roboterbaukastens aus dem nächstkommenden Stand der Technik gemäß DE-A-41 32 775 bekannt. Die Gestellachse und die Mitte des Handflansches sowie des Auslegers bilden eine gemeinsame Systemebene. Die einarmige Schwinge und der Ausleger haben jeweils eine einseitige fliegende Lagerung. Die Schwinge ist mit einem statischen hydraulischen Massenausgleich versehen und gemeinsam mit diesem auf einer Seite der Systemebene angeordnet. Der Schwingenantrieb ist als piezoelektrischer Antrieb ohne Getriebe ausgebildet. Der piezoelektrische Antrieb sitzt zusammen mit dem Lager auf derjenigen Seite der Systemebene, auf der auch die Schwinge und der statische hydraulische Massenausgleich angeordnet sind. Diese Anordnung hat antriebstechnische und dynamische Nachteile.

Die DE-A 40 01 885 zeigt einen anderen Industrieroboter. Er ist für Traglasten von mehr als 25 kg konzipiert und hinsichtlich der bewegten Massen und der Massenträgheitsmomente weitgehend optimiert. Die Schwinge ist in einem Gabelbock beidseitig gelagert und besitzt eine Kröpfung. Der Ausleger ist einseitig an der Schwinge gelagert, wobei die am Ausleger montierten Motoren für die Roboterhand in einer bestimmten Lage zur Gestellachse positioniert sind. An der Schlinge greift mittig zwischen den Lagern eine Ausgleichsvorrichtung an, die den im Betrieb auf der Schwinge lastenden Momenten und Kräften entgegenwirkt.

Die DE-A-34 47 701 zeigt einen Industrieroboter mit einseitigen fliegenden Lagerungen für Schwinge und Ausleger. Am Schwingengehäuse sind mehrere Motoren und Antriebskomponenten angeordnet, die u.a. einen Massenausgleich bewirken können.

Aus der Praxis sind ferner Industrieroboter für niedrige Lasten unterhalb von 25 kg bekannt, die einseitige fliegende Lagerungen für Schwinge und Ausleger besitzen. Durch die geringe Traglast ist kein Massenausgleich erforderlich. Die auftretenden Kräfte und Momente können im Lager und Antrieb der Schwinge aufgefangen werden. In Einzelfällen sind Gegengewichte zum Massenausgleich vorhanden.

Es ist Aufgabe der vorliegenden Erfindung, einen Industrieroboter, welcher insbesondere für Traglasten von mehr als 25 kg geeignet ist, hinsichtlich der Statik und Dynamik noch weiter zu verbessern.

Die Erfindung löst diese Aufgabe mit den Merkmalen im Hauptanspruch.
Der erfindungsgemäße Industrieroboter ist durch seine Gestaltung hinsichtlich der bewegten Massen und der Dynamik optimiert. Hierbei wirken die einseitige Anordnung und Lagerung von Schwinge und Ausleger vorteilhaft mit einem statischen hydraulischen Lastenausgleich zusammen. Dadurch können die bewegten Massen niedrig gehalten und die Komponenten des Industrieroboters auf Leichtbau optimiert werden. Der Industrieroboter wiegt nur noch ca. 50 - 60 % der üblichen Geräte mit gleicher Traglastklasse. Dies kommt einerseits der Dynamik zugute, indem der erfindungsgemäße Industrieroboter schneller und positionsgenauer als bekannte Konstruktionen ist. Zudem werden Fundamente und Tragwerke bedeutend niedriger belastet. Ferner können schwächere Antriebe und Bremsen eingesetzt werden. Insgesamt verbessert sich dadurch auch die Wirtschaftlichkeit durch Senkung der Aufwands- und der Herstellungskosten.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1 :: in einer Übersichtsdarstellung und in Seitenansicht einen Industrieroboter mit einseitiger Schwingen- und Auslegerlagerung sowie mit einem Massenausgleich,
- Figur 2 :: eine vergrößerte Darstellung der Schwingenlagerung und des Massenausgleichs von Figur 1,
- Figur 3 :: eine Draufsicht auf den Industrieroboter gemäß Pfeil III von Figur 1 und mit abgeklappter Schwinge und
- Figur 4 :: eine teilweise aufgebrochene Rückansicht des Roboters von Figur 1.

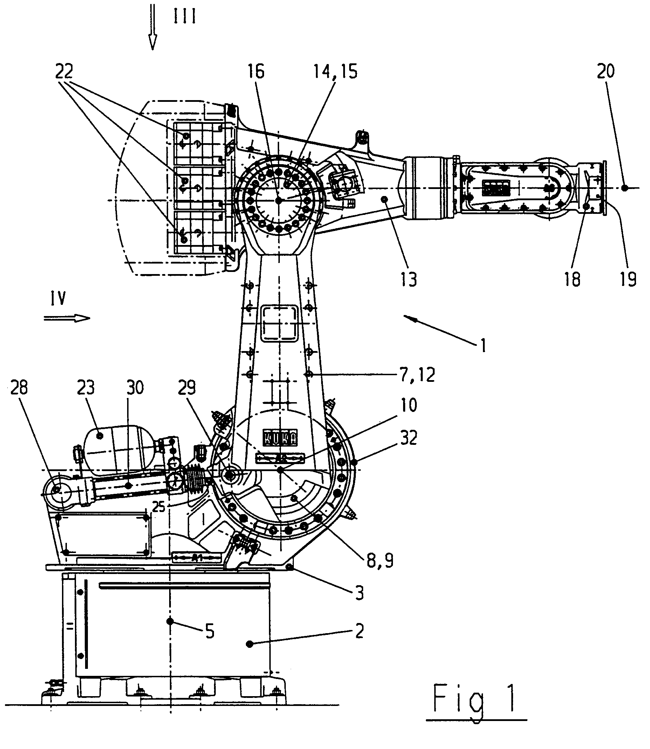

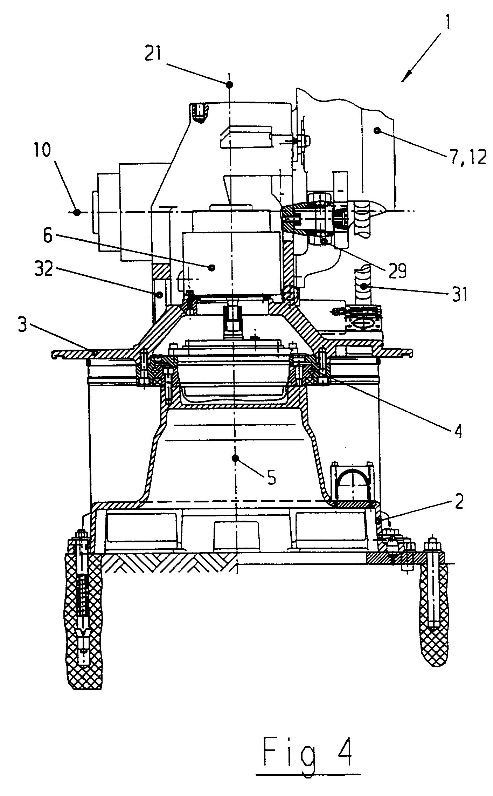

Figur 1 zeigt in Seitenansicht einen mehrachsigen Industrieroboter (1), der für Traglasten von 25 kg und mehr ausgelegt ist. Er besteht aus einem ortsfesten oder beweglichen Gestell (2), das am Kopf eine bewegliche Plattform (3) aufweist, die sich um eine vorzugsweise vertikale Gestellachse (5) dreht. Wie Figur 4 verdeutlicht, ist zwischen Plattform (3) und Gestell (2) ein Lager (4) angeordnet, das vorzugsweise in ein hochuntersetzendes Getriebe integriert oder einem Getriebe in sonstiger geeigneter Weise zugeordnet ist. Auf der Plattform (3) sitzt vorzugsweise zentrisch zur Gestellachse (5) ein Motor (6) für den Drehantrieb der Plattform (3).

Der Industrieroboter (1) weist ferner eine Schwinge (7), einen Ausleger (13) und eine vorzugsweise mehrachsige Roboterhand (18) auf. Die Schwinge (7) ist am unteren Ende an einem Schwingenlagerkopf (32) auf der Plattform (3) um eine vorzugsweise horizontale Achse (10) schwenkbar gelagert. Die Schwinge (7) befindet sich am vorderen Plattformrand, wobei die Schwingenachse (10) mit Abstand vor der Gestellachse (5) angeordnet ist.

Am oberen Ende der Schwinge (7) ist wiederum um eine ebenfalls vorzugsweise horizontale Achse (16) der Ausleger (13) schwenkbar gelagert. Dieser trägt endseitig die Roboterhand (18) mit ihren vorzugsweise drei Achsen. Die in Streckstellung längs des Auslegers (13) verlaufende Haupt-Handachse ist mit der Bezugsziffer (20) bezeichnet. Sie ist die Drehachse des Handflansches (19) der Roboterhand (18) und erstreckt sich durch die Flanschmitte.

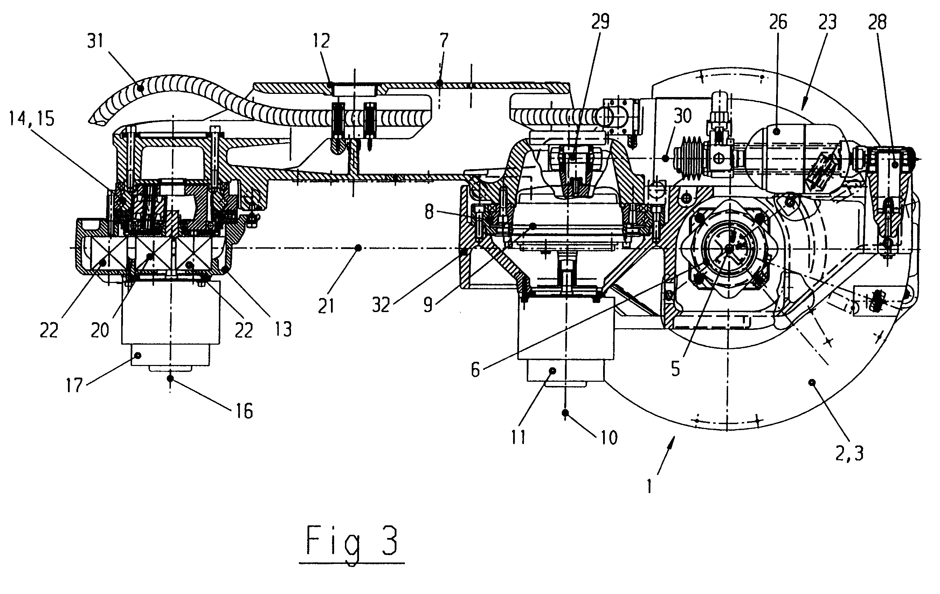

Figur 3 zeigt in der Draufsicht den Industrieroboter (1) von Figur 1, wobei allerdings die Schwinge (7) nach unten in eine im wesentlichen horizontale Lage abgeschwenkt ist und der Ausleger (13) sich vertikal nach unten durch die Zeichenebene erstreckt. Der Industrieroboter (1) hat eine sogenannte Systemebene (21), die durch die Gestellachse (5) und die Mitte des Handflansches (19) bzw. die Handachse (20) definiert wird.

Wie Figur 3 verdeutlicht, sind der Schwingenlagerkopf (32) und der Ausleger (13) gemeinsam im Bereich der Systemebene (21) angeordnet. Die Anordnung ist vorzugsweise mittensymmetrisch zur Systemebene (21). Die Schwinge (7) ist mit Abstand seitlich neben der Systemebene (21) angeordnet, hier z.B. der rechten Seite.

Die Schwinge (7) und der Ausleger (13) sind beide einseitig gelagert und mit einer fliegenden Lagerung (8,14) versehen. Die Lager (8,14) und die zugehörigen Getriebe (9,15) befinden sich knapp neben der Systemebene (21) auf der gleichen Seite wie die Schwinge (7). Die zugehörigen Motoren (11,17) sind auf der gegenüberliegenden Seite der Systemebene (21), hier der linken Seite, angeordnet.

Bei dieser Ausgestaltung empfiehlt es sich, die Motoren (22) der Roboterhand (18) im Bereich der Systemebene (21), vorzugsweise mittig zur Systemebene (21), anzuordnen. Sie können dabei längs der Systemebene (21) in einer Reihe nebeneinander positioniert sein.

Die im Betrieb auf die Schwinge (7) durch die Traglast, den Ausleger (13) etc. einwirkenden dynamischen und statischen Lasten werden durch einen statischen hydraulischen Massenausgleich (23) weitgehend kompensiert. Dieser ist auf der gleichen Seite der Systemebene (21) wie die Schwinge (7) angeordnet. Er besteht aus einem Hydraulikzylinder (24), der mit einem Druckspeicher (26) verbunden ist. Im Druckspeicher (26) befindet sich eine unter hohem Druck vorgespannte Gasblase (nicht dargestellt), die auf das Ölpolster drückt und die Gegenkräfte zur Kompensierung der Schwingenlasten erzeugt.

Der Kolben (25) des Zylinders (24) ist an der Schwinge (7) über ein Lagerauge (29) drehbar angelenkt. Der Zylinder (24) ist seinerseits am rückwärtigen Ende mittels eines Schwenklagers (28) am hinteren Rand der Plattform (3) gelagert. Der Druckspeicher (26) ist auf dem Zylinder (24) befestigt und steht mit diesem in einer Leitungsverbindung, wobei ein Sicherheitsblock (27) angeschlossen ist, der die nötigen Sicherheitsfunktionen, wie z. B. Öl- oder Gasablaß bei Überlast etc. bereitstellt.

Der Kolben (25) folgt den Schwenkbewegungen der Schwinge (7) um deren Achse (10). Beim Abschwenken der Schwinge (7) fährt er aus und pumpt dabei Hydrauliköl in den Druckspeicher (26), welches die Gasblase komprimiert. Die federnde Reaktionskraft der Gasblase wirkt auf den Kolben (24) zurück und kompensiert bei entsprechend abgestimmter Vorspannung der Gasblase die von außen auf die Schwinge (7) einwirkenden Kräfte und Momente. Beim Aufrichten der Schwinge (7) wirkt der Massenausgleich (23) unterstützend.

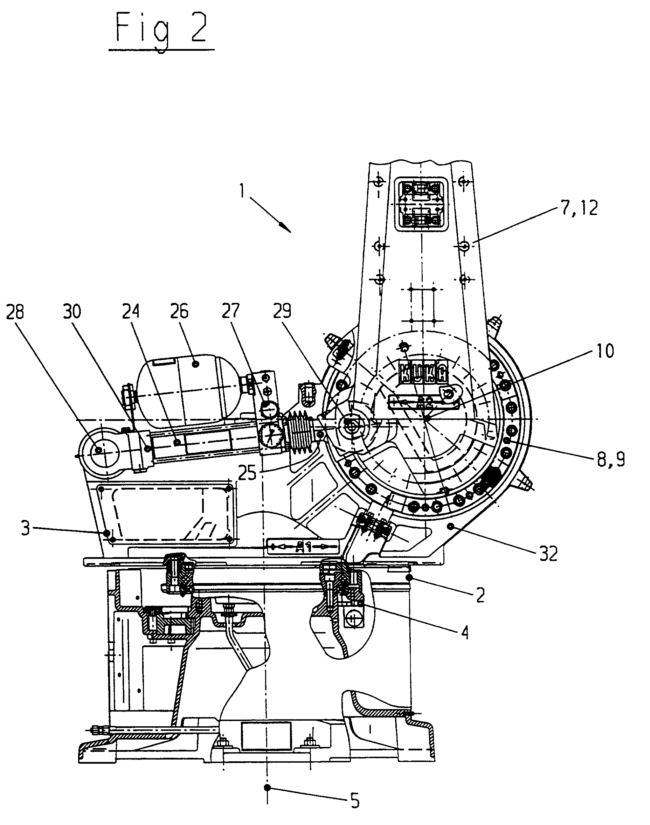

Wie aus Figur 3 und der vergrößerten Darstellung der Figur 2 ersichtlich ist, ist der Massenausgleich (23) bzw. der Zylinder (24) so angeordnet, daß seine Wirkachse (30) bei vertikal aufgerichteter Schwinge (7) im wesentlichen horizontal oder in einem kleinen Winkel von z. B. 5° schräg abwärts verläuft. Außerdem verläuft die Wirkachse (30) in dieser Stellung nahe der Schwingenachse (10) und schneidet diese vorzugsweise. In der Draufsicht gesehen ist der Massenausgleich (23) möglichst nahe an der Gestellachse (5) angeordnet. Er ist dabei so positioniert, daß die Wirkachse (30) in der Nähe der Innenseite des Schwingengehäuses (12) läuft, welche der Systemebene (21) zugewandt ist. Dadurch liegt die Wirkungsachse (30) auch sehr nahe am Schwingenlager (8). Das verringert die Kippbelastung auf das Schwingenlager (8). Ferner ergibt sich außenseitig neben dem Massenausgleich (23) genügend Platz zum Anschluß und zur Führung von Leitungen (31) für die Versorgung von Werkzeug und Roboterteilen.

Der Massenausgleich (23) greift direkt am Schwingengehäuse (12) an. Wie aus Figur 1 und 2 hervorgeht, befindet sich das Lagerauge (29) am rückwärtigen Rand des Schwingengehäuses (12) und hat einen Abstand zur Schwingenachse (10). Dieser Abstand wirkt als Hebel, durch den sich über der Abschwenkbewegung der Schwinge (7) das über die Wirkachse (30) ausgeübte lastkompensierende Moment des Massenausgleichs (23) vergrößert. In der in Figur 1 gezeigten aufrechten Schwingenstellung reduziert sich die Massenausgleichswirkung auf null.

Im gezeigten Ausführungsbeispiel sind die Lager (8,14) von Schwinge (7) und Ausleger (13) in die jeweils hochuntersetzenden Getriebe (9,15) integriert. In dieser Weise können auch Lager (4) und Getriebe des Gestells (2) ausgebildet sein. Alternativ können die Lager aber auch getrennt vom Getriebe und konzentrisch um dieses herum angeordnet sein. In einer weiteren Abwandlung können die Lager auch auf dem Getriebeumfang zentrisch geführt sein.

Wie Figur 3 verdeutlicht, ist zumindest die Schwinge (7) mit einem geraden, hohlkastenförmigen und dünnwandigen Gehäuse (12) ausgerüstet. Durch Querstege wird die Konstruktion ausgesteift und läßt innenseitig Raum zur Verlegung der Leitung (31), die vom Gestell (2) zum Ausleger (13) und den dort angeordneten Motoren (17,22) sowie zum angeflanschten Werkzeug führen können. Durch die dünnwandige Konstruktion kann das Schwingengehäuse (12) sehr leicht sein. In ähnlicher Weise läßt sich auch das Gehäuse des Auslegers (13) ausbilden.

Mit dem Schwingengehäuse (12) und den möglichst nahe an der Systemebene (21) liegenden Lagern (8,14) und Getrieben (9,15) läßt sich in Verbindung mit den gegenüberliegenden Antriebsmotoren (11,16) von Schwinge (7) und Ausleger (13) ein dynamischer Massenausgleich um die Gestellachse (5) herstellen. Die Motoren (11,17) können durch eine entsprechende Gehäusegestaltung gegebenenfalls etwas weiter von der Systemebene (21) distanziert sein.

Abwandlungen der gezeigten Ausführungsform sind in verschiedener Weise möglich. Zum einen können die auf die Systemebene (21) bezogenen Anordnungen auch vertauscht werden, so daß die in den Zeichnungen rechtsliegenden Teile auf die linke Seite wandern und die linksliegenden auf die rechte. Ferner ist es möglich, den statischen hydraulischen Massenausgleich (23) auch in einer anderen geeigneten Weise als statischen Ausgleich auszubilden, der genügend hohe Kräfte entwickelt. Außerdem können Lager und Getriebe in ihrer konstruktiven Ausgestaltung abgewandelt werden.

### BEZUGSZEICHENLISTE

- 1: Industrieroboter
- 2: Gestell
- 3: Plattform
- 4: Lager, Gestell
- 5: Achse, Gestell
- 6: Motor, Gestell
- 7: Schwinge
- 8: Lager, Schwinge
- 9: Getriebe, Schwinge
- 10: Achse, Schwinge
- 11: Motor, Schwinge
- 12: Gehäuse, Schwinge
- 13: Ausleger
- 14: Lager, Ausleger
- 15: Getriebe, Ausleger
- 16: Achse, Ausleger
- 17: Motor, Ausleger
- 18: Roboterhand
- 19: Handflansch
- 20: Handachse
- 21: Systemebene
- 22: Motor, Roboterhand
- 23: Massenausgleich
- 24: Zylinder
- 25: Kolben
- 26: Druckspeicher
- 27: Sicherheitsblock
- 28: Schwenklager
- 29: Anlenkung, Lagerauge
- 30: Wirkachse
- 31: Leitung
- 32: Schwingenlagerkopf

## Patentansprüche

1. Mehrachsiger Industrieroboter mit einem Gestell (2), einer Schwinge (7), einem Ausleger (13) und einer Roboterhand (18), die gelenkig aneinander gelagert und angetrieben sind, wobei
- die Schwinge (7) seitlich neben der von der Gestellachse (5) und von der Mitte des Handflansches (19) gebildeten Systemebene (21) angeordnet ist,
- die Schwinge (7) sowie der Ausleger (13) jeweils eine einseitige fliegende Lagerung (8,14) aufweisen,
- die Schwinge (7) mit einem statischen hydraulischen Massenausgleich (23) verbunden ist, der auf ihrer Seite der Systemebene (21) angeordnet ist,
- das Getriebe (9) und das Lager (8) der Schwinge (7) auf der einen Seite der Systemebene (21) angeordnet sind und der Motor (11) der Schwinge (7) auf der anderen Seite der Systemebene (21) angeordnet ist.

2. Industrieroboter nach Anspruch 1, dadurch **gekennzeichnet**, daß der Schwingenlagerkopf (32) des Gestells (2) und der Ausleger (13) gemeinsam in Bereich der Systemebene (21) liegen.

3. Industrieroboter nach Anspruch 1 oder 2, dadurch **gekennzeichnet**, daß die Getriebe (9,15) und die Lager (8,14) von Schwinge (7) und Ausleger (13) auf der gleichen Seite der Systemebene (21) angeordnet sind.

4. Industrieroboter nach Anspruch 1, 2 oder 3, dadurch **gekennzeichnet**, daß die Lager (8,14) in die Getriebe (9,15) integriert sind.

5. Industrieroboter nach Anspruch 1, 2, 3 oder 4, dadurch **gekennzeichnet**, daß die Motoren (11,17) von Schwinge (7) und Ausleger (13) auf der anderen Seite der Systemebene (21) angeordnet sind.

6. Industrieroboter nach einem der Ansprüche 1 bis 5, dadurch **gekennzeichnet**, daß die Motoren (22) der Roboterhand (18) im Bereich der Systemebene (21) angeordnet sind.

7. Industrieroboter nach einem der Ansprüche 1 bis 6, dadurch **gekennzeichnet**, daß die Schwinge (7) ein im wesentlichen gerades dünnwandiges Gehäuse (12) aufweist.

8. Industrieroboter nach einem der Ansprüche 1 bis 7, dadurch **gekennzeichnet**, daß der Massenausgleich (23) schwenkbar (28) am Gestell (2) gelagert ist und gelenkig (29) mit der Rückseite des Schwingengehäuses (12) verbunden ist.

9. Industrieroboter nach Anspruch 8, dadurch **gekennzeichnet**, daß die Wirkachse (30) des Massenausgleichs (23) bei vertikal ausgerichteter Schwinge (7) im wesentlichen horizontal und nahe oder durch die Schwingenachse (10) verläuft.

10. Industrieroboter nach Anspruch 8 oder 9, dadurch **gekennzeichnet**, daß die Wirkachse (30) des Massenausgleichs (23) nahe an der der Systemebene (21) zugewandten Innenseite des Schwingengehäuses (12) verläuft.

11. Industrieroboter nach Anspruch 1 oder einen der folgenden, dadurch **gekennzeichnet**, daß der Massenausgleich (23) einen hydraulischen Zylinder (24) aufweist, der mit einem Druckspeicher (26) verbunden ist, welcher eine vorgespannte Gasblase aufweist.

12. Industrieroboter nach Anspruch 11, dadurch **gekennzeichnet**, daß der Massenausgleich (23) einen Sicherheitsblock (27) aufweist.

13. Industrieroboter nach Anspruch oder einem der folgenden, dadurch **gekennzeichnet**, daß der Industrieroboter (1) auf eine Traglast von mehr als 25 kg ausgelegt ist.

## Claims

1. Multiaxis industrial robot having a frame (2), a rocker (7), a boom (13) and a robot hand (18), which are mounted and driven in mutually articulated manner, wherein
- the rocker (7) is positioned laterally alongside the system plane (21) formed by the frame axis (5) and the centre of the hand flange (19),
- the rocker (7) and boom (13) have in each case a unilateral cantilever support (8, 14),
- the rocker (7) is connected to a static, hydraulic mass compensator (23) positioned on its side of the system plane (21),
- the gear (9) and bearing (8) of the rocker (7) are positioned on one side of the system plane (21) and the motor (11) of the rocker (7) is positioned on the other side of the system plane (21).

2. Industrial robot according to claim 1, characterized in that the rocker bearing head (32) of the frame (2) and the boom (13) are jointly located in the area of the system plane (21).

3. Industrial robot according to claim 1 or 2, characterized in that the gear (9, 15) and bearings (8, 14) of rocker (7) and boom (13) are located on the same side of the system plane (21).

4. Industrial robot according to claim 1, 2 or 3, characterized in that the bearings (8, 14) are integrated in the gear (9, 15).

5. Industrial robot according to claim 1, 2, 3 or 4, characterized in that the motors (11, 17) of rocker (7) and boom (13) are placed on the other side of the system plane (21).

6. Industrial robot according to one of the claims 1 to 5, characterized in that the motors (22) of the robot hand (18) are located in the area of the system plane (21).

7. Industrial robot according to one of the claims 1 to 6, characterized in that the rocker (7) has a substantially straight, thin-walled casing (12).

8. Industrial robot according to one of the claims 1 to 7, characterized in that the mass compensator (23) is pivotably (28) mounted on the frame (2) and connected in articulated manner (29) to the back of the rocker casing (12).

9. Industrial robot according to claim 8, characterized in that the active axis (30) of the mass compensator (23) in the case of a vertically oriented rocker (7) is substantially horizontal and passes close to or through the rocker axis (10).

10. Industrial robot according to claim 8 or 9, characterized in that the active axis (30) of the mass compensator (23) passes close to the inside of the rocker casing (12) facing the system plane (21).

11. Industrial robot according to claim 1 or one of the following claims, characterized in that the mass compensator (23) has a hydraulic cylinder (24), which is connected to a pressure accumulator (26), which has a pretensioned gas pocket.

12. Industrial robot according to claim 11, characterized in that the mass compensator (23) has a safety unit (27).

13. Industrial robot according to claim 1 or one of the following claims, characterized in that the industrial robot (1) is designed for a carrying capacity of more than 25 kg.

## Revendications

1. Robot industriel multiaxial comprenant un bâti (2), une bielle basculante (7), un bras d'extension (13) et une main de robot (18), articulés entre eux et actionnés, dans lequel :
. la bielle basculante (7) est disposée latéralement à côté du plan du système (21) formé par l'axe (5) du bâti et l'axe médian de la bride-main (19),
. la bielle basculante (7) ainsi que le bras (13) présentent chacun un ensemble unilatéral de paliers (8,14) en porte-à-faux,
. la bielle basculante (7) est reliée à une masse hydraulique statique d'équilibrage (23) disposée du côté de la bielle dans le plan du système (21),
. la transmission (9) et le palier (8) de la bielle basculante (7) sont disposés d'un côté du plan du système (21) et le moteur (11) de cette bielle basculante (7) est disposé de l'autre côté de ce plan (21).

2. Robot industriel selon la revendication 1, caractérisé en ce que la tète palière (32) de la bielle basculante du support (2) et le bras (13) sont situés tous les deux dans la zone du plan du système (21).

3. Robot industriel selon la revendication 1 ou 2, caractérisé en ce que les transmissions (9,15) et les paliers (8,14) de la bielle basculante (7) et du bras (13) sont disposés du même côté du plan du système (21).

4. Robot industriel selon la revendication 1, 2 ou 3, caractérisé en ce que les paliers (8,14) sont intégrés dans les transmissions (9,15).

5. Robot industriel selon la revendication 1, 2, 3 ou 4, caractérisé en ce que les moteurs (11,17) de la bielle basculante (7) et du bras (13) sont disposés de l'autre côté du plan du système.

6. Robot industriel selon l'une quelconque des revendications 1 à 5, caractérisé en ce que les moteurs (22) de la main de robot sont disposés dans la zone du plan du système (21).

7. Robot industriel selon l'une quelconque des revendications 1 à 6, caractérisé en ce que la bielle basculante (7) présente un carter (12) sensiblement droit et à parois minces.

8. Robot industriel selon l'une quelconque des revendications 1 à 7, caractérisé en ce que la masse d'équilibrage (23) est montée basculante (28) sur le bâti (2) et reliée articulée par (29) à la face arrière du carter (12) de la bielle basculante.

9. robot industriel selon la revendication 8, caractérisé en ce que l'axe moteur (30) de la masse d'équilibrage (23) s'étend sensiblement horizontal et à proximité ou à travers l'axe (10) de la bielle basculante lorsque celle-ci est dirigée verticalement.

10. Robot industriel selon la revendication 8 ou 9, caractérisé en ce que l'axe moteur (30) de la masse d'équilibrage (23) s'étend à proximité de la paroi intérieure du carter (12) de la bielle basculante en regard du plan du système (21).

11. Robot industriel selon la revendication 1 ou l'une des suivantes, caractérisé en ce que la masse d'équilibrage (23) présente un vérin hydraulique (24) relié à un accumulateur de pression (26) du type à bulle de gaz précontrainte.

12. Robot industriel selon la revendication 11, caractérisé en ce que la masse d'équilibrage (23) présente un module de sécurité (27).

13. Robot industriel selon la revendication 1 ou l'une des suivantes, caractérisé en ce que le robot industriel (1) est étudié pour une charge supérieure à 25 kg.
